# EUROPEAN PATENT SPECIFICATION

(11) **EP 2 463 567 B1**
(45) Date of publication and mention of the grant of the patent: **23.04.2014**
(21) Application number: 11192579.8
(22) Date of filing: 08.12.2011
(51) Int. Cl.: F16L 33/04, F16L 55/172, F16L 21/06

(54) **Pipe clamp assembly with tightening element bushing**
Rohrschellenanordnung mit Spannelementbuchse
Ensemble formant collier de serrage doté d'une bague de l'élément de serrage

(30) Priority: 12.12.2010 IL 20993810
(43) Date of publication of application: 13.06.2012
(73) Proprietor: Eliezer Krausz Industrial Development Ltd., 66559 Tel Aviv (IL)
(72) Inventor: Krausz, Eliezer, 64238 Tel Aviv (IL); Chiproot, Avi, 44278 Kfar-Saba (IL)
(74) Representative: Lecomte & Partners

(56) References cited:
- EP-A2- 1 862 722
- GB-A- 104 484
- GB-A- 745 888

## Description

### FIELD OF THE INVENTION

The present invention relates generally to pipe clamp assemblies, such as those used to sealingly connect pipes together or to repair breaks or leaks in pipes.

### BACKGROUND OF THE INVENTION

Many kinds of removable band-type couplings for pipes exist in the art. It is noted that throughout the specification and claims, the term "pipe" encompasses any kind of generally cylindrical object, and the terms "clamp" and "coupling" are used interchangeably.

EP 1 862 722 A2 shows a pipe clamp assembly according to the preamble of claim 1.

For example, one well known type of pipe coupling includes a seal clamp housing. Clamp members are positioned face to face and a tightening element is tightened to press an annular seal element against the outside of the pipe inserted through the seal clamp housing. One end of the tightening element is generally installed in one of the clamp members and the other end must be brought into a socket or opening formed in the other clamp member.

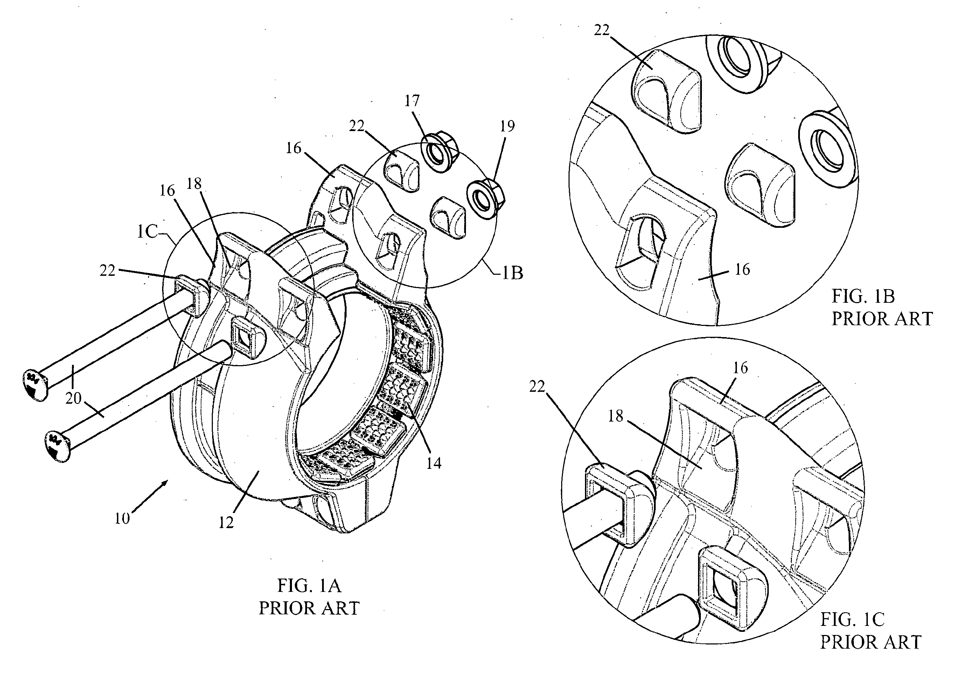

The tightening elements are generally bolts cooperating with a nut, which are tightened by a torque wrench and the like. The bolts fit into holes or other kinds of openings before tightening. The prior art has used bushings to hold the tightening elements in place during tightening, as is now explained with reference to Figs. 1A-1C.

Pipe clamp assembly 10 of the prior art includes a band 12 having an inner annular seal element 14 wrappable around a pipe (not shown). Opposing clamp members 16 extend radially outwards from ends of band 12 and are formed with mounting holes 18. Clamp member 16 are clamped and tightened together with tightening elements 20, such as but not limited to, bolts tightened by nuts 19 (with optional washers 17). A bushing 22 is placed in the mounting hole 18 of each clamp member 16. Bushing 22 is semi-cylindrical with straight, flat ends. Mounting hole 18 is correspondingly shaped with a semi-cylindrical concave shape to accommodate therein the semi-cylindrical bushing 18. By using this kind of bushing, tightening element 20 is self-wrenched in the mounting hole 18. The semi-cylindrical shape accommodates for up and down misalignnents and tolerances during the assembly.

However, a problem can occur during tightening of tightening element 20. Often when tightening one of the bolts, the bushings for other bolts which have not yet been tightened, can become loosened in their mounting holes. After the bushing is dislodged from the mounting hole, it can rotate 90° which makes it misaligned with the hole. The installer has to stop and reposition the bushing in the hole, prolonging the installation process.

### SUMMARY OF THE INVENTION

The present invention is defined by the scope of appended claim 1.

The present invention seeks to provide novel pipe clamp assembly with an improved bushing for the tightening elements, as is described more in detail further below. In the present invention, even if the bushing is dislodged from the mounting hole and rotates 90°, it remains aligned with the hole and can be simply pushed back into the hole, making the tightening operation much quicker and easier.

There is provided in accordance with an embodiment of the present invention a pipe clamp assembly including a metal band having an inner annular seal element wrappable around a pipe, opposing clamp members that extend from the band and which are formed with mounting holes, at least one tightening element for clamping together the clamp members, the tightening element passing through the mounting holes, and a bushing placed in the mounting hole through which the at least one tightening element passes, the bushing having a hemi-spherical cap portion and the mounting hole being correspondingly shaped with a hemi-spherical concave shape to accommodate therein the cap portion.

In accordance with an embodiment of the present invention the bushing includes axi-symmetrical flat faces, and the mounting hole is correspondingly shaped with opposing flat surfaces to accommodate the flat faces.

In accordance with an embodiment of the present invention the bushing includes rounded corners extending from the cap portion between the axi-symmetrical flat faces.

### BRIEF DESCRIPTION OF THE DRAWINGS

The present invention will be understood and appreciated more fully from the following detailed description, taken in conjunction with the drawings in which:
Fig. 1A is a perspective illustration of a pipe clamp assembly of the prior art;
Fig. 1B is an enlarged illustration of a bushing used on the nut side of the tightening elements used to clamp the pipe clamp assembly of the prior art;
Fig. 1C is an enlarged illustration of a bushing used on the head side of the tightening elements of the pipe clamp assembly of the prior art;
Fig. 2A is a perspective illustration of a pipe clamp assembly, constructed and operative in accordance with a non-limiting embodiment of the present invention;
Fig. 2B is an enlarged illustration of a bushing used on the nut side of the tightening elements used to clamp the pipe clamp assembly of Fig. 2A, in accordance with an embodiment of the invention; and
Fig. 2C is an enlarged illustration of a bushing used on the head side of the tightening elements of the pipe clamp assembly of Fig. 2A, in accordance with an embodiment of the invention.

### DETAILED DESCRIPTION OF EXEMPLARY EMBODIMENTS

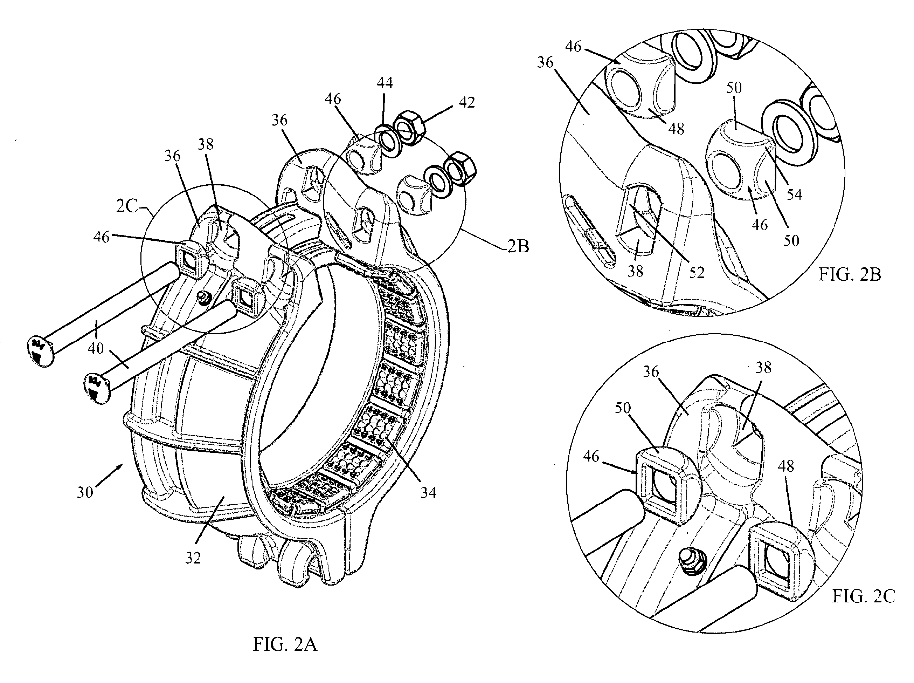

Reference is now made to Figs. 2A and 2B, which illustrate a pipe clamp assembly 30, constructed and operative in accordance with a non-limiting embodiment of the present invention.

Pipe clamp assembly 30 includes a band 32 having an inner annular seal element 34 wrappable around a pipe (not shown). Band 32 is typically made of metal and annular seal element 34 is typically, but not necessarily, made of an elastomer, such as natural or synthetic rubber.

Opposing clamp members 36 extend radially outwards from ends of band 32 and are formed with mounting holes 38. Clamp members 36 are clamped and tightened together with one or more tightening elements 40, such as but not limited to, bolts tightened by nuts 42 (with optional washers 44). A bushing 46 is placed in the mounting hole 38 of each clamp member 36. Bushing 46 has a hemi-spherical cap portion 48, and mounting hole 38 is correspondingly shaped with a hemi-spherical concave shape to accommodate therein cap portion 48. Bushing 46 has axi-symmetrical flat faces 50, for example, four flat faces spaced 90° from one another. Mounting hole 38 is correspondingly shaped with flat surfaces 52 (e.g., two opposing flat surfaces 52) to accommodate the flat faces 50 so that tightening element 40 is self-wrenched in the mounting hole 38. The hemi-spherical shape accommodates for omnidirectional misalignments and tolerances during the assembly.

Bushing 46 may include rounded corners 54 extending from cap portion 48 between the axi-symmetrical flat faces 50.

In the present invention, even if bushing 46 is dislodged from mounting hole 38 and rotates 90°, due to the axi-symmetry, bushing 46 remains aligned with hole 38 and can be simply pushed back into hole 38, making the tightening operation much quicker and easier.

## Claims

1. A pipe clamp assembly (30) comprising:
a metal band (32) having an inner annular seal element (34) wrappable around a pipe;
opposing clamp members (36) that extend from said band (32) and which are formed with mounting holes (38); and ,
at least one tightening element (40) for clamping together said clamp members (36), said tightening element (40) passing through said mounting holes (38);
**characterised by** a bushing (46) placed in each said..mounting hole (38) through which said at least one tightening element (40) passes, said bushing (46) having a hemispherical cap portion (48) and each said mounting hole (38) being correspondingly shaped with a hemi-spherical concave shape to accommodate therein said cap portion (48).

2. The pipe clamp assembly (30) according to claim 1, wherein said bushing (46) comprises axi-symmetrical flat faces (50), and each said mounting hole (38) is correspondingly shaped with opposing flat surfaces (52) to accommodate said flat faces (50).

3. The pipe clamp assembly (30) according to claim 2, wherein said bushing (46) comprises rounded corners (54) extending from said cap portion (48) between said axi-symmetrical flat faces (50).

4. The pipe clamp assembly (30) according to claim 2, wherein said axi-symmetrical flat faces (50) comprise four flat faces spaced 90° from one another.

5. The pipe clamp assembly (30) according to claim 2, wherein each said mounting hole (38) is correspondingly shaped with two opposing flat surfaces (52).

## Patentansprüche

1. Rohrklemmenanordnung (30), umfassend:
ein Metallband (32) mit einem inneren ringförmigen Dichtungselement (34), das um ein Rohr herumlegbar ist;
gegenüberliegende Klemmelemente (36), die sich von besagtem Band (32) erstrecken und mit Montageöffnungen (38) ausgebildet sind; und
mindestens ein Spannelement (40) zum Zusammenklemmen der Klemmelemente (36), wobei das Spannelement (40) sich durch die Montageöffnungen (38) hindurch erstreckt;
**gekennzeichnet durch** eine Buchse (46), die in jeder Montageöffnung (38) platziert ist, **durch** die sich das mindestens eine Spannelement (40) hindurch erstreckt, wobei die Buchse (46) einen halbkugelförmigen Kappenteil (48) aufweist und jede derartige Montageöffnung (38) entsprechend mit einer halbkugelförmigen, konkaven Form ausgebildet ist, um diesen Kappenteil (48) darin aufzunehmen.

2. Rohrklemmenanordnung (30) nach Anspruch 1, wobei die Buchse (46) achsensymmetrische flache Seiten (50) umfasst und jede besagte Montageöffnung (38) entsprechend mit gegenüberliegenden flachen Oberflächen (52) ausgebildet ist, um die flachen Seiten (50) aufzunehmen.

3. Rohrklemmenanordnung (30) nach Anspruch 2, wobei die Buchse (46) abgerundete Ecken (54) umfasst, die sich von dem Kappenteil (48) zwischen den achsensymmetrischen flachen Seiten (50) erstrecken.

4. Rohrklemmenanordnung (30) nach Anspruch 2, wobei die achsensymmetrischen flachen Seiten (50) vier um 90° voneinander beabstandete flache Seiten umfassen.

5. Rohrklemmenanordnung (30) nach Anspruch 2, wobei jede besagte Montageöffnung (38) entsprechend mit zwei gegenüberliegenden flachen Oberflächen (52) ausgebildet ist.

## Revendications

1. Assemblage de collier de serrage (30) comprenant :
une bande métallique (32) possédant un élément d'étanchéité interne (34) de forme annulaire apte à venir s'enrouler autour d'un tuyau ;
des membres opposés de collier de serrage (36) qui s'étendent à partir de ladite bande (32) et dans lesquels sont pratiqués des trous de montage (38) ; et
au moins un élément de serrage (40) pour fixer les uns aux autres lesdits membres de collier de serrage(36), ledit élément de serrage (40) traversant lesdits trous de montage (38) ;
**caractérisé par** une douille (46) placée dans chacun desdits trous de montage (38) à travers laquelle passe ledit au moins un élément de serrage (40), ladite douille (46) possédant une portion semi-sphérique (48) en forme de capuchon et chacun desdits trous de montage (38) étant configuré de manière correspondante avec une forme concave semi-sphérique pour que vienne s'y loger ladite portion (48) en forme de capuchon.

2. Assemblage de collier de serrage (30) selon la revendication 1, dans lequel ladite douille (46) comprend des faces plates disposées en symétrie axiale (50), et chacun desdits trous de montage (38) est configuré de manière correspondante avec des surfaces plates opposées (52) pour que viennent s'y disposer lesdites faces plates (50).

3. Assemblage de collier de serrage (30) selon la revendication 2, dans lequel ladite douille (46) comprend des coins arrondis (54) s'étendant à partir de ladite portion (48) en forme de capuchon entre lesdites faces plates (50) disposées en symétrie axiale.

4. Assemblage de collier de serrage (30) selon la revendication 2, dans lequel lesdites faces plates (50) disposées en symétrie axiale comprennent quatre faces plates espacées les unes des autres en formant un angle de 90 °.

5. Assemblage de collier de serrage (30) selon la revendication 2, dans lequel chacun desdits trous de montage (38) est configuré de manière correspondante avec deux surfaces plates opposées (52).
